# EUROPEAN PATENT APPLICATION

(11) **EP 0 646 626 A2**
(43) Date of publication of application: **05.04.1995**
(21) Application number: 94110161.0
(22) Date of filing: 30.06.1994
(51) Int. Cl.: C08L 69/00, C08K 7/06

(54) **Polymer mixture comprising an aromatic polycarbonate resin, a graft copolymer and carbon fibres; the use of carbon fibres to improve the glow wire properties of polymer mixtures**

(30) Priority: 20.09.1993 NL 9301621
(71) Applicant: GENERAL ELECTRIC COMPANY, Schenectady, NY 12345 (US)
(72) Inventor: Maas, Christianus Johannes Jacobus, NL-4600 AC Bergen op Zoom (NL); Fontana, Luca Pietro, NL-4600 AC Bergen op Zoom (NL)
(74) Representative: Grever, Frederik

(57) **Abstract**

The invention relates to polymer mixtures comprisigng an aromatic polycarbonate, a graft copolymer and carbon fibres. Polymer mixtures which comprise an aromatic polycarbonate and a graft copolymer having a rubber substrate have a good impact strength. By adding such graft copolymers to aromatic polycarbonates, these do no longer satisfy the glow wire test". The composition according to the invention satisfies the glow wire test and has a good impact strength.

## Description

The invention relates to a polymer mixture which comprises the following constituents:
A. an aromatic polycarbonate resin; and
B. 3-12% by weight of a graft copolymer obtained by grafting one or more monomers on a rubber substrate with a glass transition temperature of less than 0°C; and
C. 0.1-1.0% by weight of carbon fibres, the quantities by weight being calculated with respect to the sum of the uantities by weight of the constituents A, B and C.

The invention also relates to the use of carbon fibres to vary the properties of a polymer mixture which comprises an aromatic polycarbonate resin and a graft copolymer in such a manner that the polymer mixture has better properties with regard to the glow wire test.

Aromatic polycarbonate resins are generally known. They have numerous good properties among which a good impact strength. It is known to improve the properties of aromatic polycarbonate resins by mixing these with graft copolymers obtained by grafting one or more monomers on a rubber substrate with a glass transition temperature of less than 0°C. The addition of such graft copolymers quite unexpectedly involved that the aromatic polycarbonate behaves much more favourably in the glow wire test, as a result of which the mixture of the aromatic polycarbonate with the graft copolymer is no longer suitable for certain uses in the electroindustry.

The invention is based on the discovery that the addition of carbon fibres to the above-mentioned mixtures of aromatic polycarbonate resins and graft copolymers improves the behaviour in the filament test.

The polymer mixture according to the invention comprises at any rate the following constituents:
A. an aromatic polycarbonate resin;
B. a graft copolymer as defined hereinbefore, and
C. carbon fibres, in the quantities stated hereinbefore.

The polymer mixture according to the invention may moreover comprise other polymers and conventionally used additives.

### A. Aromatic polycarbonate resin.

Aromatic polycarbonates are materials known per se.
They are generally prepared by reacting a dihydric phenol compound with a carbonate precursor, for example, phosgene, a halogen formiate or a carbonate ester. Aromatic polycarbonates are polymers which comprise units of formula V 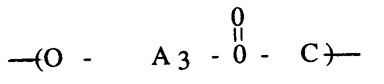
wherein A3 is a bivalent aromatic radical derived from the dihydric phenol used in the preparation of the polymer. As dihydric phenols may be used in the preparation of the aromatic polycarbonates: mononuclear or polynuclear aromatic compounds which comprise two hydroxy radicals each directly bonded to a carbon atom of an aromatic nucleus.

The branched polycarbonates known per se and disclosed, for example, in US-A-4,001,184 are also suitable.

Suitable aromatic polycarbonates are also the so-called polyester carbonates which are obtained by carrying out the polymerisation reaction in the presence of an ester precursor, for example, a difunctional carboxylic acid, for example, terephthalic acid or an ester-forming derivative thereof. These polyester carbonates have ester compounds and carbonate compounds in the polymeric chain. Polyester carbonates are disclosed, for example, in US-A-3,169,121.

It is also possible to use a mixture of various polycarbonates.

### B. Graft copolymer

The polymer mixture according to the invention comprises a graft copolymer obtained by grafting one or more monomers on a rubber substrate at a glass transition temperature of less than 0°C. The rubber substrate may be built up from various materials, for example, EPDM rubbers, acrylate rubbers built up from acrylate esters, for example, butyl acrylate, diene rubbers, for example, butadiene rubbers or butadiene styrene rubbers. A graft copolymer is preferably used with a rubber substrate which is built up from butadiene for 50 or more % by weight, or rather more than 70% by weight.
One or more monomers have been grafted on the rubber substrate. Suitable monomers are vinyl aromatic monomers, for example, styrene, acrylonitrile, methacrylonitrile, acryl esters, for example, methyl acrylate and methyl methacrylate, acrylic acid, methacrylic acid and maleic acid, maleimides and N-aryl maleimides. The so-called MBS or ABS graft copolymers are to be preferred. These are graft copolymers built up from units derived from butadiene on which methyl methacrylate and styrene (MBS) or acrylonitrile and styrene (ABS) have been grafted.

### C. Carbon fibres

Any type of carbon fibres may be used. However, carbon fibres having a comparatively short length of less than 10 millimetres are to be preferred.

The polymer mixture according to the invention comprises 2-12% by weight of the graft copolymer. When higher concentrations of the graft copolymer are used, the results in the glow wire test remain bad also after the addition of carbon fibres. Addition of less than 2% by weight of the graft copolymer does not lead to the desired improvement of other properties, for example, the impact strength properties, of the aromatic polycarbonate. The carbon fibres are added in a quantity from 0.1 to 1.0% by weight. Larger quantities are not necessary to achieve the desired result. Smaller quantities do not lead, or lead hardly, to an improvement in the glow wire test.

In addition to the constituents mentioned hereinbefore, the polymer mixture according to the invention may comprise other polymers and conventionally used additives. Not all the polymers are suitable. It is necessary for each individual case to examine whether the added polymers do not disturb the improvement in the glow wire test as a result of the addition of the carbon fibres. Examples of conventionally used additives are dyes, pigments, fillers, stabilisers, mould-release agents, and flame-retardant additives.

The polymer mixture according to the invention may be prepared according to conventionally used techniques. It is preferably prepared by compounding the desired constituents in an extruder.

### Examples and comparative examples

The following constituents were used in the following examples:
- PC:: An aromatic polycarbonate homopolymer derived from bisphenol A and phosgene having an intrinsic viscosity of 53 ml/g measured in methylene chloride at 25°C.
- MBS:: a graft copolymer built up from 74% by weight of a rubber substrate of butadiene on which 12% by weight of styrene and 14% by weight of methyl methacrylate have been grafted.
- ABS:: A graft copolymer built up from 50% by weight of a rubber substrate of butadiene on which 37.5% by weight of styrene and 12.5% by weight of acrylontrile have been grafted.
- CF:: carbon fibres having a length of 6 millimetres.
- ST:: a mixture of conventionally used stabilisers.
- TO:: titanium dioxide.

The constituents mentioned hereinbefore were extruded in an extruder in the quantities as recorded in the Table hereinafter. The extruder was adjusted at an average temperature of approximately 295°C. The extrudate was chopped up to pellets. Test sheets were injection-moulded from the resulting pellets. The sheets were tested according to the glow wire test (IEC 695-2-1). In this test the sheets were clamped, heated, and pressed against a glowing wire for 30 seconds so that the sheet catches fire. The wire is then pulled loose from the sheet and the time to flame extinction is measured. In order to satisfy the specification, the sheet must extinguish within 30 seconds. The test was carried out at 960°C. In a first series of tests the thickness of the sheets was 2.5 millimetres; in a second series of tests it was 3.2 millimetres.

Moreover, rods were injection-moulded from the resulting pellets to determine the notched impact strength according to Izod (ASTM D 256). The impact strength was measured at various temperatures so as to determine the transition from ductile to brittle fracture.

The results obtained are also recorded in the table hereinafter

**TABLE**

| Example Nr. | **A** | **B** | **C** | **I** | **II** | **III** | **IV** | **V** | **VI** |
|---|---|---|---|---|---|---|---|---|---|
| Composition (wt.parts) | | | | | | | | | |
| -PC | 99.2 | 95.2 | 98.7 | 94.7 | -- | -- | -- | -- | -- |
| -MBS | -- | 4 | -- | 4 | 4 | 9 | 12 | -- | -- |
| -ABS | -- | -- | -- | -- | -- | -- | | 6 | 9 |
| -CF | -- | -- | .5 | .5 | -- | -- | -- | -- | -- |
| -S | .3 | .3 | .3 | .3 | -- | -- | -- | -- | -- |
| -TO | .5 | .5 | .5 | .5 | -- | -- | -- | -- | -- |

| Properties glow wire test Extinction time | | | | | | | | | |
|---|---|---|---|---|---|---|---|---|---|
| 2.5 mm (sec) | 4 | >30 | 2 | 13 | -- | -- | -- | -- | -- |
| 3.2 mm (sec) | | | | | 9 | 25 | >30 | 9 | 21 |
| Impact strength (J/m) | 750 | 650 | 190 | 650 | -- | -- | -- | -- | -- |
| Ductile/brittle transition temp. (°C) | -15 | -30 | >25 | -15 | -- | -- | -- | -- | -- |

It may be seen from the results of the table that polycarbonates themselves have a good impact strength and a reasonable ductile/brittle transition temperature. A good result is also obtained in the filament test (comparative example A). The addition of a graft copolymer (comparative example B) leads to a considerable drop in the ductile/brittle transition temperature, but the polymer mixture is not satisfactory in the filament test. The addition of carbon fibres to polycarbonate (comparative example C) leads to a dramatic deterioration of the impact strength and of the ductile/brittlew transition temperature. The value for the glow value test is slightly improved. In example I according to the invention a good combination of properties is obtained: the glow wire test gives a reasonable result, the impact strength is good and the ductile/brittle transition temperature is as good as it is of polycarbonate itself.

## Claims

1. A polymer mixture which comprises the following constituents:
A. an aromatic polycarbonate resin; and
B. 2-12% by weight of a graft copolymer obtained by grafting one or more monomers on a rubber substrate with a glass transition temperature of less than 0°C; and
C. 0.1-1.0% by weight of carbon fibres, the quantities by weight being calculated with respect to the sum of the quantities by weight of the constituents A, B and C.

2. A polymer mixture as claimed in Claim 1, **wherein** constituent B is a graft copolymer which has been obtained by grafting one or more monomers on a rubber which is built up for 50 or more % by weight from units derived from butadiene.

3. The use of carbon fibres to improve the properties as regards the glow wire test of polymer mixtures which comprise an aromatic polycarbonate resin and a graft copolymer obtained by grafting one or more monomers on a rubber substrate at a glass transition temperature of less than 0°C.
